# EUROPEAN PATENT SPECIFICATION

(11) **EP 2 130 714 B1**
(45) Date of publication and mention of the grant of the patent: **20.04.2011**
(21) Application number: 09002734.3
(22) Date of filing: 26.02.2009
(51) Int. Cl.: B60N 2/28, B60R 22/10

(54) **Child seat**
Kindersitz
Siège pour enfant

(30) Priority: 07.05.2008 JP 2008121343
(43) Date of publication of application: 09.12.2009
(73) Proprietor: Takata Corporation, Tokyo 106-8510 (JP)
(72) Inventor: Yamanishi, Takahiro, Tokyo 106-8510 (JP); Kaneko, Hideki, Tokyo 106-8510 (JP)
(74) Representative: Banzer, Hans-Jörg

(56) References cited:
- JP-A- 2004 130 996
- US-B1- 6 241 174
- US-B1- 6 247 208

## Description

### Technical Field of the Invention

The present invention relates to a child seat which is mounted and secured to a vehicle seat with a seat belt designed for use by an adult occupant (hereinafter, sometimes referred to as "adult seat belt") and which is adapted to be firmly secured to the vehicle seat by winding up the adult seat belt onto a wind-up shaft to apply tension on the adult seat belt. More particularly, the present invention relates to a child seat which comprises a handle for rotating the wind-up shaft and a clutch mechanism for allowing the handle to idle when a torque exceeding the predetermined value is applied to the handle.

### Related Art

An example of a child seat which is adapted to be firmly secured to a vehicle seat by winding up an adult seat belt onto a wind-up shaft to apply tension on the adult seat belt and which comprises a handle for rotating the wind-up shaft and a clutch mechanism for allowing the handle to idle when a torque exceeding the predetermined value is applied to the handle is disclosed in JP-A-2004-130996.

Hereinafter, the child seat disclosed in this publication will be described with reference to FIG. 11 through FIG. 21.

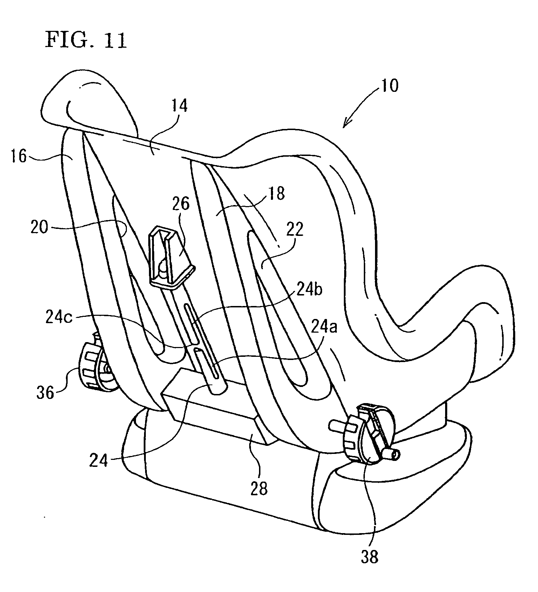

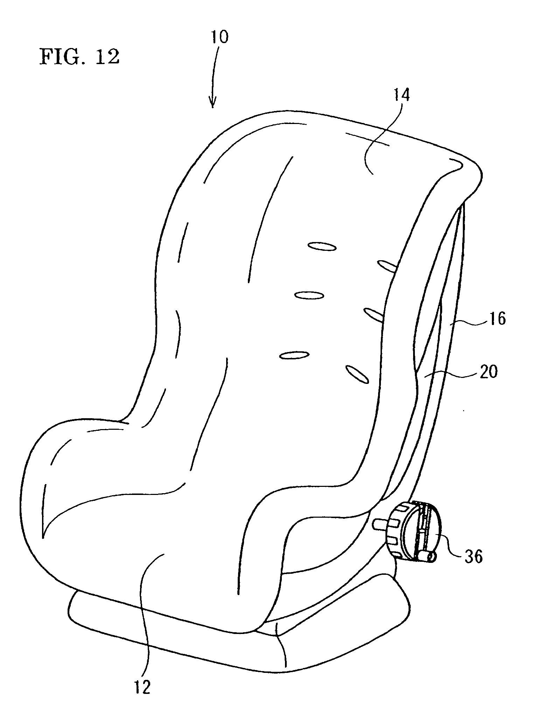

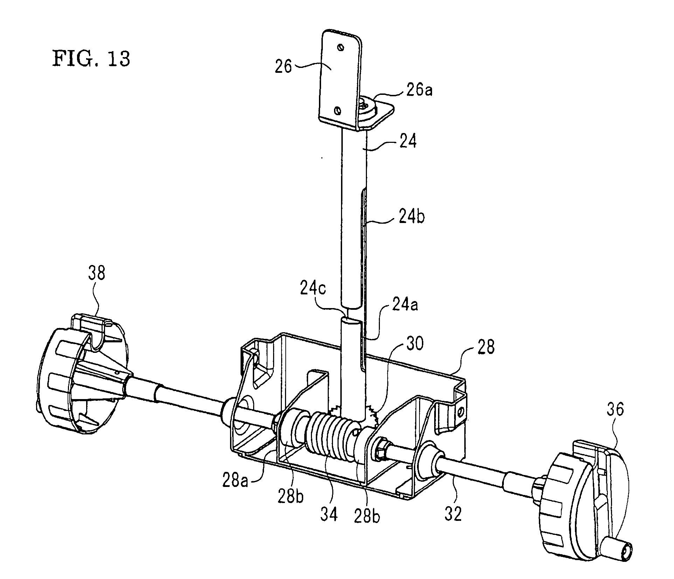

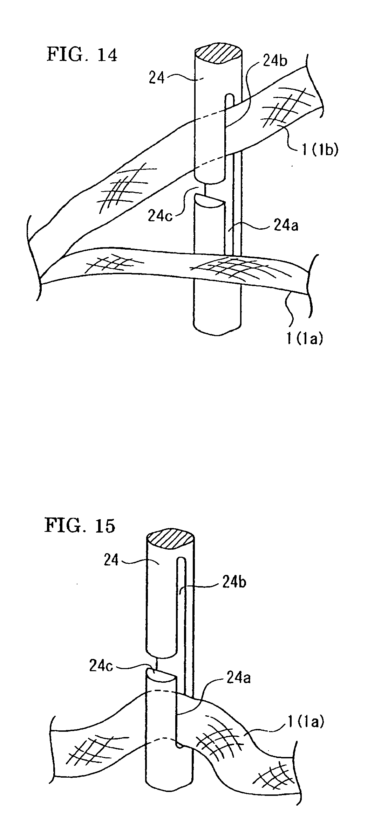

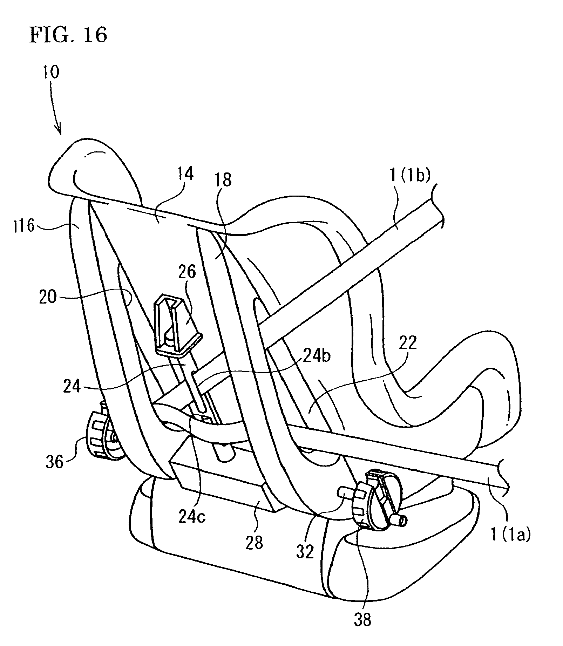

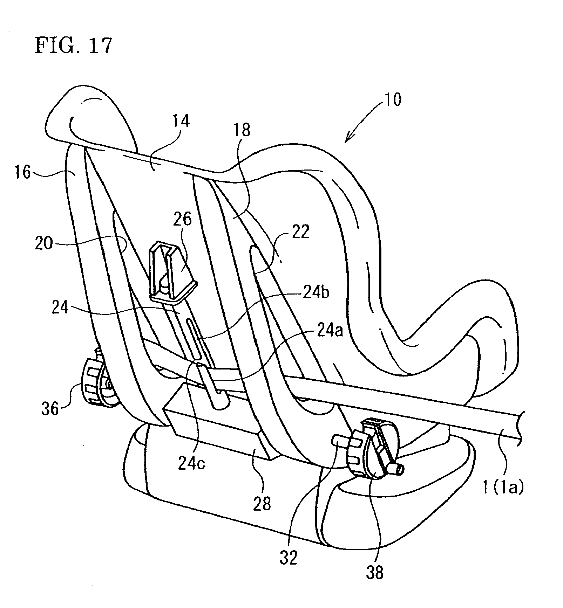

FIG. 11 is a perspective view taken from the back of the child seat of the aforementioned publication, FIG. 12 is a perspective view taken from the front of the child seat, FIG. 13 is a perspective view showing a rotational mechanism for rotating a wind-up shaft, FIG. 14 and FIG. 15 are partial perspective views showing a state that a seat belt is engaged with the wind-up shaft, FIG. 16 and FIG. 17 are entire perspective views taken from the back of the child seat in the state that the seat belt is engaged with the wind-up shaft. FIG. 14 and FIG. 16 show the situation that a shoulder belt of a three-point seat belt is engaged in a shoulder belt slit of the wind-up shaft and FIG. 15 and FIG. 17 show the situation that a lap belt of a two-point seat belt is engaged in a lap belt slit of the wind-up shaft.

The child seat 10 is adapted to be mounted and secured to a vehicle seat (not shown) with an adult seat belt 1 of a vehicle.

The seat belt 1 is a seat belt of which a proximal end portion is connected to a retractor such that the seat belt can be wound up by the retractor, a distal end portion is connected to a vehicle body by a lap anchor, and a midway portion passes through a deflection fitting. The seat belt 1 passes through a belt through aperture of a tongue (not shown). A portion of the seat belt between the tongue and the deflection fitting is defined as the shoulder belt 1b and a portion of the seat belt between the tongue and the lap anchor is defined as the lap belt 1a.

The child seat 10 comprises a seat portion 12 on which a child is seated, a backrest portion 14, ribs 16, 18 projecting rearwards from both side edges of the back face of the backrest portion 14, adult seat belt through apertures 20, 22 which are formed in the ribs 16, 18, respectively, and a wind-up shaft 24 for winding up the adult seat belt which is arranged halfway between the seat belt through apertures 20 and 22.

The wind-up shaft 24 extends vertically along the backrest portion 14. The wind-up shaft 24 has a lap belt slit 24a and a shoulder belt slit 24b into which the lap belt 1a and the shoulder belt 1b of the adult seat belt 1 are inserted, respectively. The shoulder belt slit 24b is located above the lap belt slit 24a. The lap belt slit 24a and the shoulder belt slit 24b are disposed adjacent to each other in a vertical direction and continue into each other via a common belt inlet 24c.

As shown in FIG. 14 and FIG. 15, the lap belt slit 24a and the shoulder belt slit 24b are formed to penetrate the wind-up shaft 24 in the diametrical direction and to extend in the axial direction (vertical direction) of the wind-up shaft 24. The lap belt slit 24a and the shoulder belt slit 24b are formed linearly in the axial direction of the wind-up shaft 24. The belt inlet 24c is formed at a middle portion between the lap belt slit 24a and the shoulder belt slit 24b to cut a side peripheral surface of the middle portion of the wind-up shaft 24.

The ribs 16, 18 extend vertically along the back face of the backrest portion 14. The seat belt through apertures 20, 22 are also formed to extend vertically along the backrest portion 14.

The upper end of the wind-up shaft 24 is supported by a bracket 26 attached to the back face of the backrest portion 14 such a manner as to allow the rotation of the wind-up shaft 24 about its axis. The lower end of the wind-up shaft 24 is inserted into a mechanical box 28 arranged at a lower portion of the backrest portion 14. Within the mechanical box 28, a worm wheel 30 is fixed to the lower end of the wind-up shaft 24.

The mechanical box 28 is arranged between lower end portions of the left and right ribs 16 and 18. The both side faces of the mechanical box 28 are connected to the opposite faces of the ribs 16, 18, respectively. Through holes (not shown) are formed in the both side faces of the mechanical box 28 and the ribs 16, 18, respectively, so that a worm shaft 32 described later can pass through these through holes.

As shown in FIG. 13, within the mechanical box 28, the worm shaft 32 is arranged adjacent to the worm wheel 30 at the lower end of the wind-up shaft 24 to extend in the width direction perpendicular to the extending direction of the wind-up shaft 24. The worm gear 34 is fixed to the worm shaft 32 and is meshed with the worm wheel 30. The both ends of the worm shaft 32 penetrate the both side faces of the mechanical box 28 and the left and right ribs 16, 18 so as to extend outside the child seat 10, respectively. The worm shaft 32 is provided at its both ends with handles 36, 38 for operation of rotating the worm shaft 32 about its axis. The handles 36, 38 are provided with knobs 40 for facilitating the operation of the handles 36, 38.

In FIG. 13, numeral 26a designates a bearing to which the upper end of the wind-up shaft 24 is rotatably fitted. Numeral 28a designates a bracket holding the worm shaft 32 and numeral 28b designates bearings attached to the bracket 28a for rotatably supporting the worm shaft 32.

By the operation of rotating either of the handles 36, 38, the wind-up shaft 24 is rotated through the worm shaft 32, the worm gear 34, and the worm wheel 30, whereby the lap belt 1a inserted in the lap belt slit 24a or the shoulder belt 1b inserted in the shoulder belt slit 24b is wound around the wind-up shaft 24. The worm wheel 30 and the worm gear 34 have a self-locking function. Therefore, even though the user releases his/her hand from the handle 36 or 38 after the lap belt 1a or the shoulder belt I b is wound around the wind-up shaft 24, the wind-up shaft 24 is stayed against the tension of the belt 1a, 1b by the self-locking function not to rotate in a direction opposite to the belt winding direction, thereby preventing slack of seat belt 1 after the lap belt 1a or the shoulder belt 1b is wound up.

Each handle 36, 38 is connected to the worm shaft 32 via a torque clutch 50 with torque limiter for limiting the winding torque. The torque clutch is adapted to force the handle 36, 38 to idle when the handle 36, 38 is rotated in the belt winding direction after the lap belt 1a or the shoulder belt 1b is sufficiently wound around the wind-up shaft 24 and the preset tension has been exerted on the belt 1a, 1b, thereby preventing winding torque from being further applied to the wind-up shaft 24.

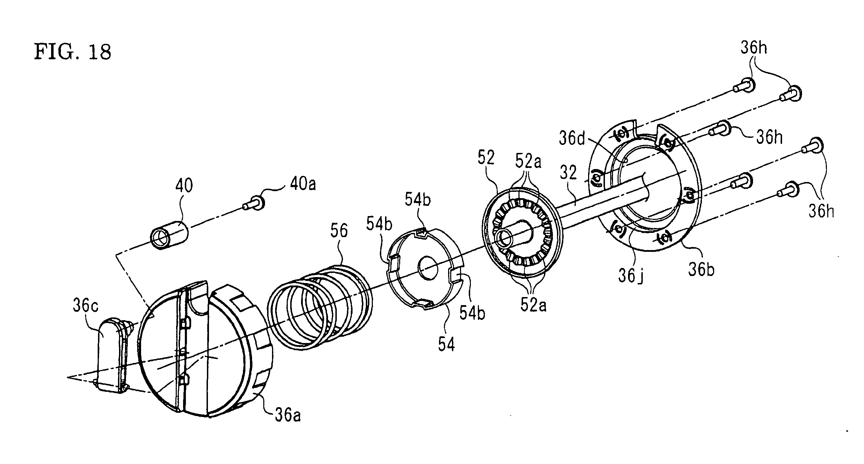

Hereinafter, the structures of the handle 36, 38 and the torque clutch 50 will be described in detail with reference to FIG. 18 through FIG. 21 (c).

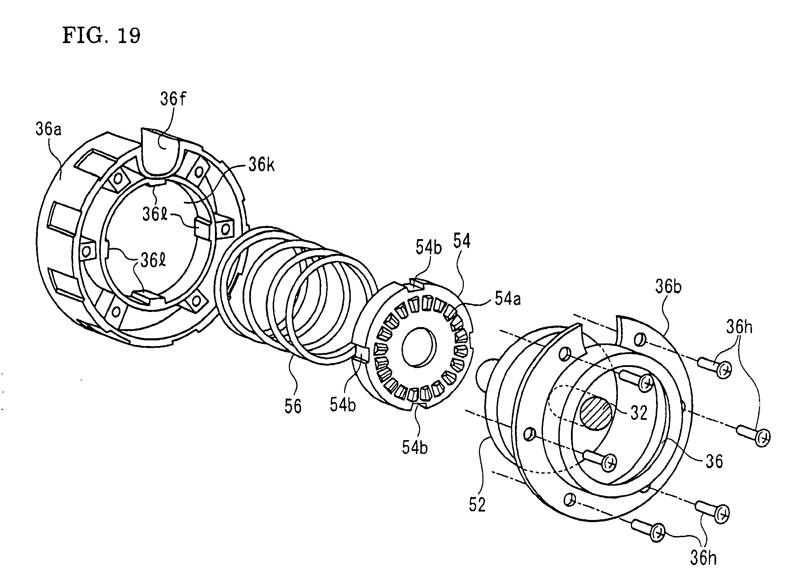

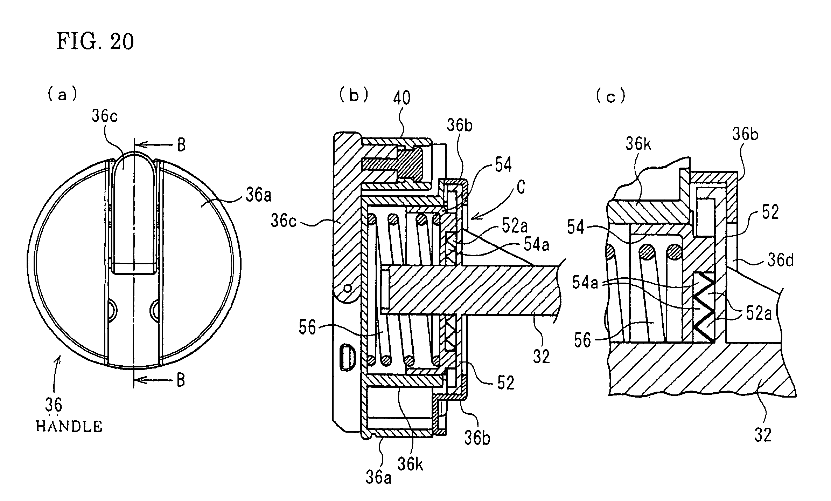

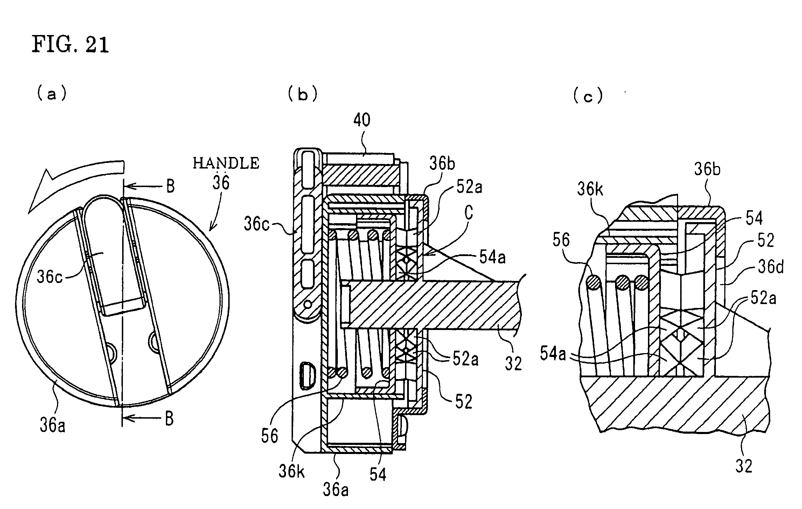

FIG. 18 and FIG. 19 are exploded perspective views, taken from the front of the handle 36 and taken from behind of the handle 36, respectively, showing the handle 36 and the torque clutch 50. FIGS. 20(a)-20(c) and FIGS. 21 (a)-21 (c) are illustrations for explaining the operation of the torque clutch when the torque applied to the handle 36 does not exceed a predetermined value and when the torque applied to the handle 36 exceeds the predetermined value, wherein FIG. 20(a) and FIG. 21(a) are plan views of the handle 36, FIG. 20(b) and FIG. 21(b) are sectional views taken along line B-B of FIG. 20 (a) and FIG. 21 (a), respectively, and FIG. 20(c) and FIG. 21(c) are enlarged view of portion C of FIG. 20(b) and FIG. 21 (b), respectively. Though only the handle 36 is shown in FIG. 18 through FIG. 21 (c), the handle 38 has the same structure as that of the handle 36.

The handle 36 comprises a handle casing 36a having a substantial cylindrical container shape of which back side is an open end face, a cover 36b attached to the open end face of the handle casing 36a, and an arm 36c for supporting the knob 40 which is disposed on a front end face of the handle casing 36a. The torque clutch 50 is accommodated within the handle casing 36a. The worm shaft 32 is inserted into the handle casing 36a through an aperture 36d of the cover 36b.

The arm 36c is pivotally attached to the handle casing 36a so as to take a position where the knob 40 is accommodated and a position where the knob 40 is projected and is thus in the usable state. In FIG. 18, numeral 40a designates a bolt for rotatably attaching the knob 40 to the arm 36c. Numeral 36h designates screws for fixing the cover 36b to the handle casing 36a.

The torque clutch 50 comprises a first clutch disc 52 fixed at the end of the worm shaft 32, a second clutch disc 54 disposed facing the first clutch disc 52, and a clutch spring 56 for pressing the second clutch disc 54 to the first clutch disc 52. The first clutch disc 52 and the second clutch disc 54 have serrations 52a, 54a, composed of triangle convexities and engageable with each other, on the respective opposed surfaces thereof. The serrations 52a, 54a are arranged on the surfaces of the clutch discs 52, 54 to form circles having the same radius coaxially with the worm shaft 32.

The first clutch disc 52 is held in a first clutch disc holding space 36j formed on the inside of the cover 36b. The second clutch disc 54 is held in a second clutch disc holding space 36k formed in the handle casing 36a.

The second clutch disc holding space 36k is provided with projections 361 for guiding the second clutch disc 54 in a direction closer to and apart from the first clutch disc 52 and for coupling the second clutch disc 54 and the handle casing 36a to rotate together. The projections 361 are slidably engaged with guide grooves 54b formed in the periphery of the second clutch disc 54.

The clutch spring 56 is disposed in the compressed (storing force) state between the second clutch disc 54 and the bottom surface of the second clutch disc holding space 36k. As the handle casing 36a is rotated, the second clutch disc 54 is rotated together. Though the serrations 54a of the second clutch disc 54 tend to cross over the serrations 52a of the first clutch disc 52 so that the second clutch disc 54 tends to come off the first clutch disc 52, the clutch spring 56 has such a biasing force (spring constant) as to press the second clutch disc 54 not to come off the first clutch disc 52 so as to prevent the serration 54a from crossing over the serrations 52a until rotational torque exceeding a predetermined value (for example, 10 kgf.cm or 1 Nm) is applied to the handle 36.

In the torque clutch 50 having the aforementioned structure, when the rotational torque applied to the handle 36 does not exceed the predetermined value, the serrations 54a do not cross over the serrations 52a so as to keep the engagement between the first clutch disc 52 and the second clutch disc 54 because of the biasing force of the clutch spring 56 as shown in FIGS. 20(a)-20(c). Therefore, the first clutch disc 52 and the second clutch disc 54 are rotated together so that the rotational torque applied to the handle 36 is transmitted to the worm shaft 32, whereby the worm shaft 32 is rotated.

When the rotational torque applied to the handle 36 exceeds the predetermined value, the second clutch disc 54 comes off the first clutch disc 52 while the serrations 54a cross over the serrations 52a against the biasing force of the clutch spring 56 as shown in FIGS. 21(a)-21(c). Therefore, the handle 36 idles so as to prevent the rotational torque applied to the handle 36 from being transmitted to the worm shaft 32.

Hereinafter, steps of installing the child seat 10 to a vehicle seat will be described.

In case using an adult seat belt 1 composed of only a lap belt 1a, i.e. so-called two-point seat belt, the child seat 10 is put on the vehicle seat, after that, the lap belt 1a is passed through one of the seat belt through apertures 20, 22 and is then passed through the other through aperture 22 or 20 so as to extend between the through apertures 20 and 22 as shown in FIG. 17, and a tongue connected to the end of the lap belt 1a is then latched with a buckle. Then, the halfway of the lap belt 1a between the through apertures 20 and 22 is inserted into the lap belt slit 24a through the belt inlet 24c.

After that, either of the handles 36, 38 is turned to rotate the wind-up shaft 24 so that the lap belt 1a is wound around the wind-up shaft 24 until sufficient tension is applied to the lap belt 1a, thereby firmly securing the child seat 10 to the vehicle seat with the lap belt 1a.

In case using an adult seat belt 1 composed of a lap belt 1a and a shoulder belt 1b, i.e. so-called three-point seat belt, the child seat 10 is put on the vehicle seat after that, the lap belt 1a and the shoulder belt 1b are passed through one of the seat belt through apertures 20, 22 and are then passed through the other through aperture 22 or 20 so as to extend between the through apertures 20 and 22 as shown in FIG. 16, and a tongue is then latched with a buckle. After that, the halfway of the shoulder belt 1b between the through apertures 20 and 22 is inserted into the shoulder belt slit 24b through the belt inlet 24c.

After that, either of the handles 36, 38 is turned to rotate the wind-up shaft 24 so that the shoulder belt 1b is wound around the wind-up shaft 24 until sufficient tension is applied to the lap belt 1a and the shoulder belt 1b, thereby firmly securing the child seat 10 to the vehicle seat with the lap belt 1a and the shoulder belt 1b.

In the child seat 10, each handle 36, 38 is connected to the worm shaft 32 through the torque clutch 50 so that the handle 36, 38 is adapted to idle when tension exceeding the predetermined value is applied to the lap belt 1a and the shoulder belt 1b by winding the lap belt 1a and the shoulder belt 1b around the wind-up shaft 24, thereby preventing excessive winding torque from being exerted on the wind-up shaft 24.

US 6,247,208 B1 describes an apparatus for tightening a belt. The apparatus includes a U-shaped structure including a base and two arms, each of the arms having a slot to receive the belt. A ratchet mechanism is provided in the base. The ratchet mechanism includes a pivotably mounted catch and a toothed wheel. The catch engages the toothed wheel.

### Disclosure of the Invention

### Problems to be solved by the Invention

In the aforementioned publication JP2004-130996, the clutch spring 56 is arranged in the axial direction of the handle 36, 38, and receives reaction force from the handle casing 36a to press the second clutch disc 54 to the first clutch disc 52. The first clutch disc 52 is supported by the cover 36b from the rear side thereof. That is, the biasing force of the clutch spring 56 acts on the handle casing 36a and the cover 36b in the direction apart from each other via the clutch discs 52, 54.

Therefore, there is a need to press the cover 36b to the handle casing 36a with large force when securing the cover 36b to the handle casing 36a with the screws after the clutch spring 56 and the clutch discs 52, 54 are accommodated inside the handle casing 36a and the covering 36b. Accordingly, the working efficiency for assembling the handle 36, 38 is low.

Since the clutch spring 56 is arranged in the axial direction of the handle 36, 38, the thickness of the handle 36, 38 in the axial direction is increased because of the stroke of the clutch spring 56.

It is an object of the present invention to provide a child seat which is secured to a vehicle seat by winding up an adult seat belt onto a wind-up shaft to apply tension on the adult seat belt and which comprises a handle for rotating the wind-up shaft and a clutch mechanism for allowing the handle to idle when a torque exceeding the predetermined value is applied to the handle, wherein the handles are easily assembled and can be made compact.

### Means to Solve the Problems

According to the present invention, this object is achieved by a child seat as defined in claim 1. The dependent claims define preferred and advantageous embodiments of the present invention.

A child seat of the present invention is a child seat adapted to be secured to a seat of a vehicle by an adult seat belt for an adult occupant in the vehicle, comprising: a wind-up shaft which has a slit into which the adult seat belt is inserted and which can rotate in a state the adult seat belt is inserted into the slit so as to wind up the adult seat belt, thereby applying tension to the adult seat belt; a shaft which is interlocked with the wind-up shaft to rotate said wind-up shaft; a handle which is attached to the shaft; and a clutch mechanism which makes the handle idle when a torque exceeding a predetermined value is applied to the handle; wherein the clutch mechanism comprises: a pressed surface which is provided on one of the shaft and the handle; a press member which is provided on the other one of the shaft and the handle and is pressed to the pressed surface; and a spring for pressing the press member to the pressed surface, wherein the spring has such a spring constant as to prevent the handle from idling relative to the shaft by frictional force between the press member and the pressed surface when the torque applied to the handle does not exceed a predetermined value and as to allow the press member to slide along the pressed surface against the frictional force between the press member and the pressed surface so as to allow the handle to idle relative to the shaft, and is characterized in that the spring is disposed in a direction perpendicular to the axial direction of the shaft and biases the press member to the pressed surface in the direction perpendicular to the axial direction of the shaft and biases direction perpendicular to the axial direction of the shaft.

The pressed surface may be a cylindrical surface extending substantially coaxially with said shaft.

According to an embodiment of the invention, a convexity is formed to project from one of the pressed surface and the press member toward the other one and a concavity which is detachably engaged with the convexity is formed in the other one.

According to another embodiment of the invention, a telescopic member which is protractable and retractable in the expansion and contraction directions of the shaft is arranged at a distal end side of said shaft, wherein said handle is attached to a distal end side of the telescopic member.

### Effects of the Invention

In the child seat of the present invention, the spring for pressing the press member to the pressed surface biases the press member to the pressed surface in the direction perpendicular to the axial direction of the shaft to which the handle is connected. Accordingly, for connecting the handle to the shaft, the handle is never biased in a direction apart from the shaft by the spring, thereby facilitating the operation of connecting the handle to the shaft.

Further, since the spring is arranged in the direction perpendicular to the axial direction of the shaft, the spring does not expand in the axial direction, thereby achieving reduced thickness in the axial direction of the handle. This can make the handle small in size and light in weight. As the handle is small in size as mentioned above, even an operator having a small hand can securely grip the handle, that is, easy handle operation can be achieved. In addition, since the distance of the handle projecting outwardly from the child seat can be reduced, the handle is hard to collide with something around the child seat.

In the present invention, the pressed surface is preferably a cylindrical surface extending substantially coaxially with said shaft. Accordingly, the movement of the press member along the pressed surface when the handle idles is smooth.

According to an embodiment of the invention, the convexity projecting from one of the pressed surface and the press member toward the other one comes off the concavity formed in the other one when the handle idles. From vibration generated by idling of the handle, the operator senses feeling of click and thus can easily recognize that the handle idles, that is, the tension applied to the adult seat belt reaches the predetermined value.

According to another embodiment of the invention, when the handle is not used, the handle can be positioned adjacent to the outer surface of the child seat by bringing the telescopic member to the retraction direction, thereby preventing the handle from causing an obstruction, for example, while carrying the child seat. When the handle is used, the handle can be moved apart from the outer surface of the child seat and closer to the operator by moving the telescopic member in the expansion direction of the shaft, thereby allowing the operator to securely grip the handle for the operation.

### Brief Explanation of the drawings

FIG.1 is a perspective view taken from the back of a child seat according to an embodiment of the present invention.
FIG. 2 is a perspective view taken from the front of the child seat of FIG. 1.
FIG. 3 is a perspective view showing a rotational mechanism for rotating a wind-up shaft in the child seat of FIG 1.
FIG. 4 is an exploded perspective view showing a handle and a clutch mechanism of the child seat of FIG. 1.
FIG. 5 is a sectional view of the handle and the clutch mechanism of the child seat of FIG. 1, taken in a direction perpendicular to a worm shaft.
FIG. 6 is a sectional view of the handle and the clutch mechanism of the child seat of FIG. 1, taken in a direction perpendicular to the worm shaft.
FIG. 7 is a sectional view of the handle and the clutch mechanism of the child seat of FIG. 1, taken in a direction parallel to the worm shaft.
FIG. 8 is a sectional view of the handle and the clutch mechanism of the child seat of FIG. 1, taken in a direction parallel to the worm shaft.
FIG. 9 is a sectional view similar to FIG. 7 when the handle is accommodated.
FIG. 10 is an entire perspective views taken from the back of the child seat in which the seat belt is engaged with the wind-up shaft of the child seat of FIG. 1.
FIG. 11 is a perspective view taken from the back of a child seat of prior art.
FIG. 12 is a perspective view taken from the front of the child seat of FIG. 11.
FIG. 13 is a perspective view showing a rotational mechanism for rotating a wind-up shaft of the child seat of FIG. 11.
FIG. 14 is a partial perspective view showing a state that a seat belt is engaged with the wind-up shaft of the child seat of FIG. 11.
FIG. 15 is a partial perspective view showing a state that a seat belt is engaged with the wind-up shaft of the child seat of FIG. 11.
FIG. 16 is an entire perspective view taken from the back of the child seat in the state that the seat belt is engaged with the wind-up shaft of the child seat of FIG. 11.
FIG. 17 is an entire perspective view taken from the back of the child seat in the state that the seat belt is engaged with the wind-up shaft of the child seat of FIG. 11.
FIG. 18 is an exploded perspective view showing a handle and a torque clutch of the child seat of FIG. 11.
FIG. 19 is an exploded perspective view showing the handle and the torque clutch of the child seat of FIG. 11.
FIGS. 20(a)-20(c) are illustrations for explaining the operation of the torque clutch when the torque applied to the handle does not exceed a predetermined value in the child seat of FIG. 11.
FIGS. 21(a)-21(c) are illustrations for explaining the operation of the torque clutch when the torque applied to the handle 36 exceeds the predetermined value in the child seat of FIG. 11.

### Best Modes for carrying out the Invention

Hereinafter, embodiments of the present invention will be described with reference to the drawings.

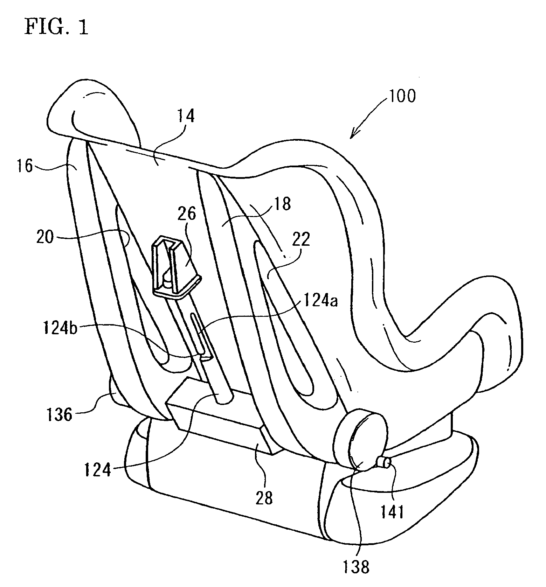

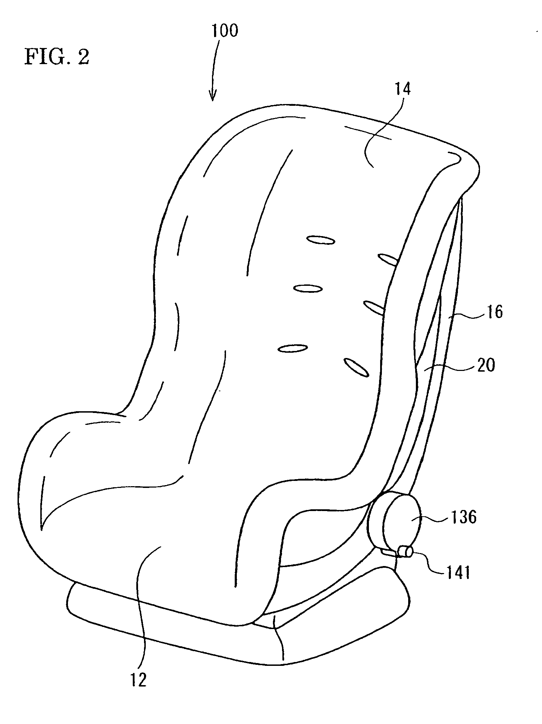

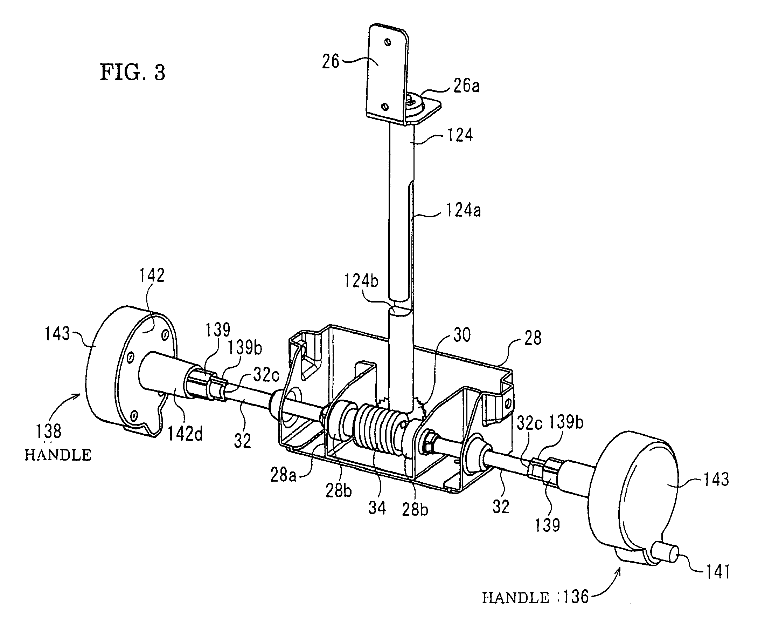

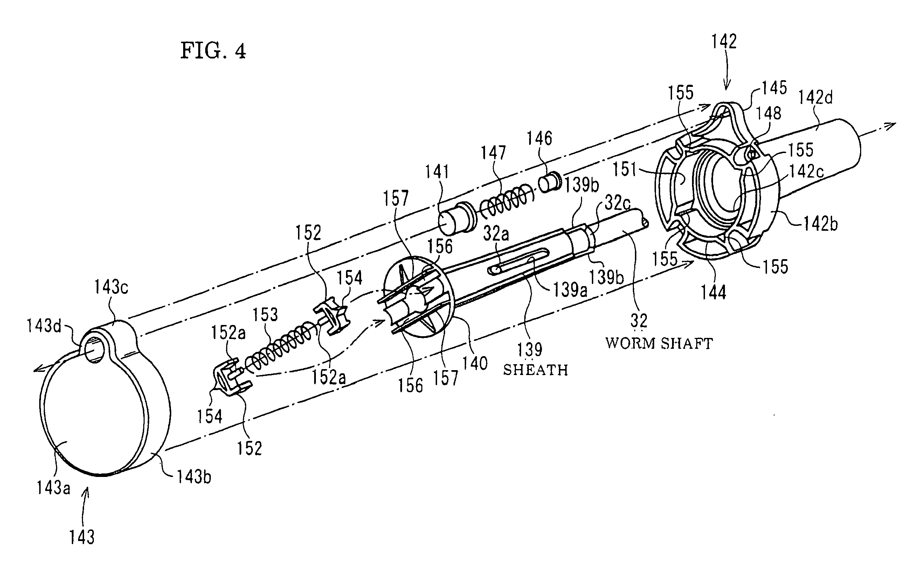

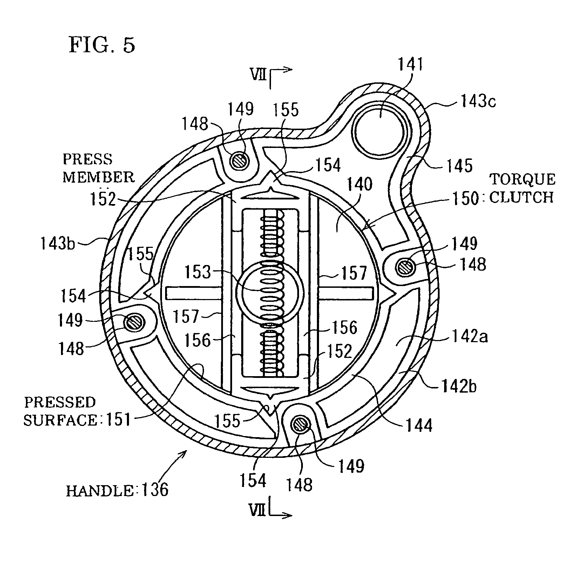

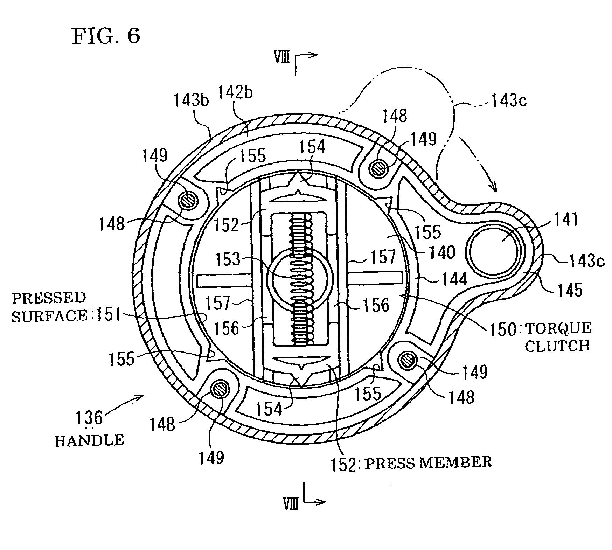

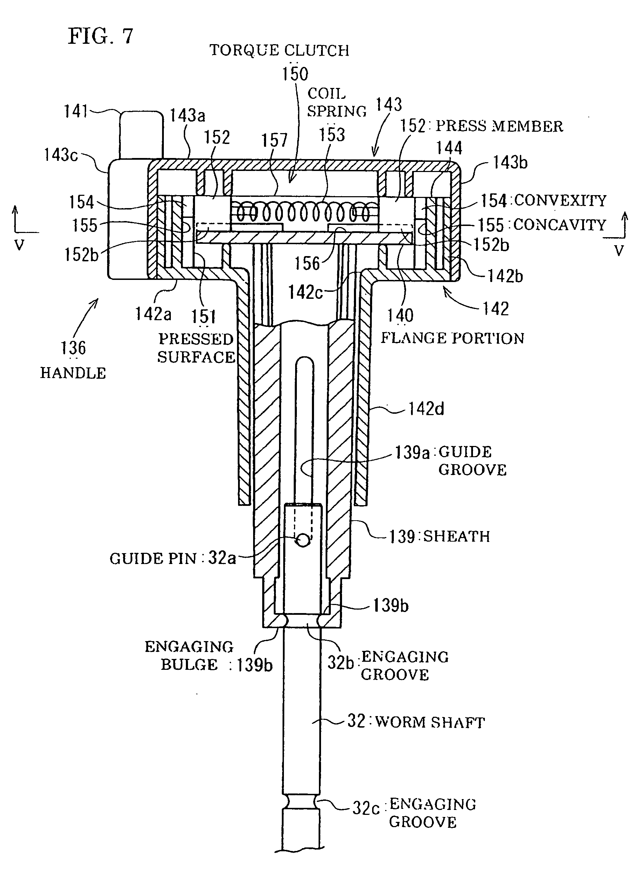

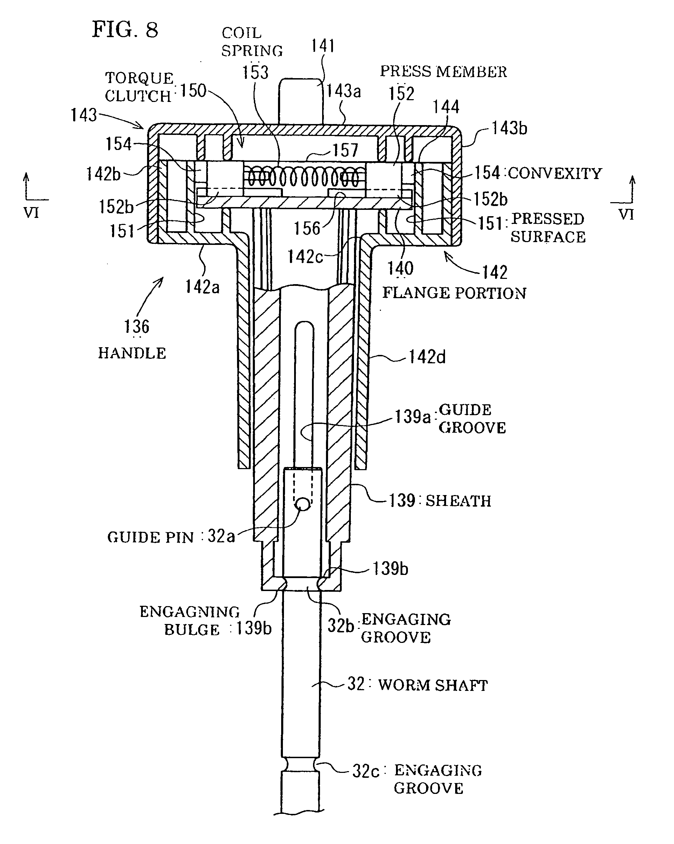

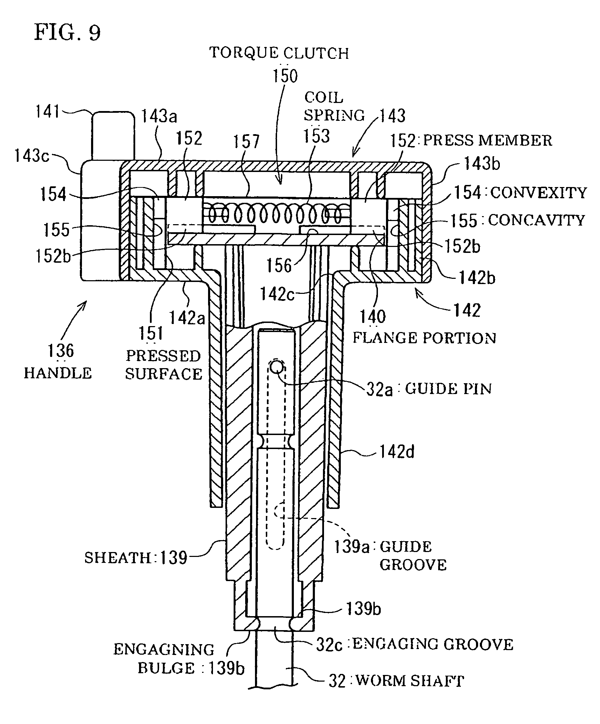

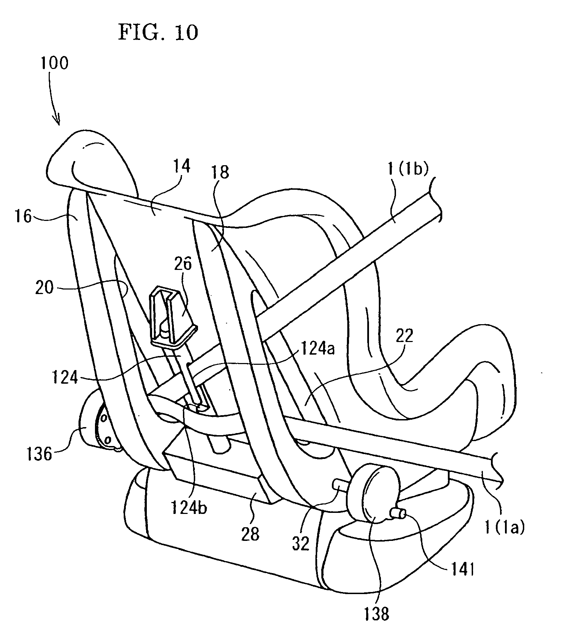

FIG. 1 is a perspective view taken from the back of a child seat according to an embodiment of the present invention, FIG. 2 is a perspective view taken from the front of the child seat, FIG. 3 is a perspective view showing a rotational mechanism for rotating a wind-up shaft, FIG. 4 is an exploded perspective view showing a handle and a clutch mechanism of the child seat, Fig. 5 and FIG. 6 are sectional views (taken along a line V-V and a line VI-VI of FIG. 7 and FIG.8) of the handle and the clutch mechanism in a direction perpendicular to a worm shaft, FIG. 7 and FIG. 8 are sectional views (taken along a line VII-VII and a line VIII-VIII of FIG. 5 and FIG. 6) of the handle and the clutch mechanism in a direction parallel to the worm shaft, FIG. 9 is a sectional view similar to FIG. 7 when the handle is accommodated, and FIG. 10 is an entire perspective views taken from the back of the child seat in which the seat belt is engaged with the wind-up shaft.

FIG. 5 and FIG. 7 show the situation that a torque applied to the handle does not exceed the predetermined value and FIG. 6 and FIG. 8 show the situation that a torque applied to the handle exceeds the predetermined value.

The forward, rearward, leftward, and rightward directions in the following description correspond to the forward, rearward, leftward, and rightward directions with regard to a person sitting in the child seat.

The child seat 100 has the same structure as that of the child seat 10 disclosed in the aforementioned publication JP2004-130996, except that a wind-up shaft 124, handles 136, 138 for rotating the wind-up shaft 124, and a torque clutch 150 as a clutch mechanism for allowing the handle 136, 138 to idle when a torque exceeding the predetermined value is applied to the handle 136, 138 which are different from the wind-up shaft 24, the handles 36, 38, and the torque clutch 50 mentioned above. Since the same components in FIG. 1 through FIG. 10 will be marked with the same numerals as those in FIG. 11 through FIG. 21, description about components other than the wind-up shaft 124, the handles 136, 138, and the torque clutch 150 will be omitted.

Also in the child seat 100, the wind-up shaft 124 is disposed on a back face of the backrest portion 14 about at a middle portion between the left and right ribs 16, 18 to extend vertically along the back face of the backrest portion 14. The upper end of the wind-up shaft 124 is supported by a bracket 26 attached to the back face of the backrest portion 14 such a manner as to allow the rotation of the wind-up shaft 124 and the lower end of the wind-up shaft 124 is inserted into a mechanical box 28 arranged at a lower portion of the back face of the backrest portion 14. Within the mechanical box 28, a worm wheel 30 is fixed to the lower end of the wind-up shaft 124 and is meshed with a worm gear 34 of a worm shaft 32.

In the child seat 100, the wind-up shaft 124 has a belt slit 124a into which the shoulder belt 1b is inserted. The belt slit 124a is formed to penetrate the wind-up shaft 124 in the diametrical direction and to extend in the axial direction (i.e. the vertical direction) of the wind-up shaft 124 for a predetermined length. A belt inlet 124b for access to the belt slit 124a is formed by cutting out a side periphery near the lower end of the belt slit 124a of the wind-up shaft 124.

In this embodiment, sheaths139 as telescopic members are attached to the both ends of the worm shaft 32. In this embodiment, each sheath 139 is a cylindrical member of which diameter is larger than that of the worm shaft 32 and is fitted onto the worm shaft 32 substantially coaxially with the worm shaft 32 and in such a manner that the sheath 139 is protractable and retractable in the expansion and contraction directions of the worm shaft 32. The end side of the worm shaft 32 is sometimes referred to as the distal end side and the middle side in the axial direction of the worm shaft 32 is sometimes referred to as the rear end side.

Each sheath 139 is provided with a guide groove 139a which is formed in a side periphery of the sheath 139 to extend in the axial direction. The worm shaft 32 is provided with guide pins 32a which project from outer peripheries of both end portions of the worm shaft 32 in the radial direction. The guide pins 32a are fitted to the guide grooves 139a, respectively. Therefore, the sheaths 139 are connected to the worm shaft 32 not to allow the rotation of the sheaths 139 relative to the worm shaft 32. That is, the sheaths 139 can rotate together with the worm shaft 32.

Each sheath 139 can move to the distal end side of the worm shaft 32 to take a protraction position where the guide pin 32a comes in contact with the rear end of the guide groove 139a as shown in FIG. 7 and can move to the rear end side of the worm shaft 32 to take a retraction position where the guide pin 32a comes in contact with the distal end of the guide groove 139a as shown in FIG. 9.

At the protraction position, each sheath 139 is in a state protruding from the distal end of the worm shaft 32 in the lateral direction of the child seat 10 as shown in FIG. 7. The moving distance of each sheath 139 from the retraction position to the protraction position, that is, the protruding length from the distal end of the worm shaft 32 of the each sheath 139 is about 50 mm. As shown in FIG. 9, even when each sheath 139 is in the retraction position, the distal end of the sheath 139 projects from the distal end of the worm shaft 32 so that the distal end of the worm shaft 32 never project from the distal end of the sheath 139.

In this embodiment, engaging grooves 32b, 32c are formed in the outer surface of the worm shaft 32 to stop the sheath 139 at the protrusion position and the retraction position, respectively. In addition, formed at a rear end side of the sheath 139 are engaging bulges 139b which can engage the engaging grooves 32b, 32c. As shown in FIG. 7 and FIG. 9, the engaging groove 32b is positioned at the distal end side of the worm shaft 32 and the engaging groove 32c is positioned at the rear end side of the worm shaft 32 relative to the engaging groove 32b.

As the sheath 139 moves to the protraction position, the engaging bulges 139b at the rear end side of the sheath 139 elastically engage the engaging groove 32b at the distal end side of the worm shaft 32 as shown in FIG. 7, thereby securing the sheath 139 at the protraction position. As the sheath 139 is pressed toward the rear end side of the worm shaft 32 by force exceeding a predetermined value, the engaging bulges 139b come off the engaging groove 32b so as to allow the sheath 139 to move to the retraction position. As the sheath 139 moves to the retraction position, the engaging bulges 139b elastically engage an engaging groove 32c at the rear end side of the worm shaft 32, thereby securing the sheath 139 at the retraction position. As the sheath 139 is pulled toward the distal end side of the worm shaft 32 by force exceeding a predetermined value, the engaging bulges 139b come off the engaging groove 32c so as to allow the sheath 139 to move to the protraction position.

Each sheath 139 is provided at its distal end with a substantially disc-like flange portion 140 radially projecting from the side periphery thereof.

In this embodiment, the distal ends of the sheaths 139 are connected to the handles 136, 138 through the torque clutches 150, respectively. A knob 141 to be held with the operator's finger or the like is formed to project from the distal end surface of each handle 136, 138. Though only the handle 136 is shown in FIG. 4 through FIG. 8, the handle 138 has the same structure as that of the handle 136, so the illustration and description about the handle 138 will be omitted.

The handle 136 comprises a handle casing 142 which is rotatably attached to the distal end side of the sheath 139, a handle cover 143 for covering the handle casing 142, and the like. The torque clutch 150 is accommodated within the handle casing 142.

The handle casing 142 is a substantially cylindrical container shape having a substantially circular bottom portion 142a and a peripheral wall portion 142b standing along the peripheral edge of the bottom portion 142a. The bottom portion 142a is provided with a shaft through hole 142c formed in the center thereof. The handle casing 142 is arranged substantially coaxially with the sheath 139. The distal end portion of the sheath 139 is disposed within the handle casing 142 through the shaft through hole 142c. The shaft through hole 142c has a diameter which is smaller than that of the flange portion 140 at the distal end of the sheath 139 and is larger than that of the portion of the sheath 139 other than the flange portion 140. The peripheral portion of the shaft through hole 142c of the bottom portion 142a face the back surface of the flange portion 140.

Inside the peripheral wall portion 142b, an internal cylinder 144 like a peripheral wall surrounding the flange portion 140 is formed to stand from the bottom portion 142a. The internal cylinder 144 is arranged substantially coaxially with the flange portion 140 to surround all around the flange portion 140. The inner diameter of the internal cylinder 144 is larger than the outer diameter of the flange portion 140 so that the flange portion 140 is rotatably accommodated inside the internal cylinder 144.

In this embodiment, the inner periphery of the internal cylinder 144 functions as a pressed surface 151 of the clutch mechanism 150.

Inside the internal cylinder 144, press members 152 to be pressed to the pressed surface 151 are disposed. In this embodiment, there are two press members 152 at different positions in the diametrical direction and a coil spring 153 is disposed between these press members 152.

The coil spring 153 is arranged such that its axial direction extends in a diametrical direction of the internal cylinder 144, i.e. in a direction connecting the press members 152. The coil spring 153 is disposed in the compressed state (that is, the storing force state) between these press members 152. By the coil spring 153, the press members 152 are biased in the direction apart from each other so that the press members 152 are pressed to the pressed surface 151.

Numeral 152a (Fig. 4) designates a pin for supporting the coil spring 153 which projects from the rear end surface (surface opposite to the surface facing the pressed surface 151) of each press member 152. The respective pins 152a of the press members 152 are inserted into the both ends of the coil spring 153, respectively.

A distal end surface of each press member 152 (surface facing the pressed surface 151) is an arc-like curved surface extending along the curve of the pressed surface 151. Each press member 152 has a convexity 154 projecting from the distal end surface thereof to the pressed surface 151.

The pressed surface 151 is provided with concavities 155 each of which is engaged with the convexity 154 of the press member 152. In this embodiment, four concavities 155 are formed at every 90° angle in the circumferential direction of the sheath 139, but the number and positions of the concavities 155 are not limited thereto.

In this embodiment, as shown in FIG. 5 and FIG. 6, the convexity 154 has a substantially triangular shape in section with an acuate end and the concavity 155 has a substantially V-like shape in section of which width is gradually reduced in the depth direction. However, the shapes of the concavity 154 and the convexity 155 are not limited thereto.

As the handle 136 is rotated by operation in the state that the convexities 154 are engaged with the concavities 155, the convexities 154 are about to slide out of the concavities 155 with retracting the press members 152 against the biasing force of the coil spring 153. However, the coil spring 153 has such a spring constant as to prevent the convexities 154 from sliding out of the concavities 155, that is, to prevent the handle 136 from idling relative to the sheath 139 because of frictional force between the press member 152 and the pressed surface 151 and frictional force between the contact surfaces of the convexities 154 and the concavities 155 until the rotational torque applied to the handle 136 exceeds a predetermined value (for example, 10 kgf.cm or 1 Nm). When the rotational torque applied to the handle 136 exceeds the predetermined value, the convexities 154 overcome the frictional forces to slide out of the concavities 155 so that the press members 152 slide along the pressed surface 151. Accordingly, the handle 136 idles relative to the sheath 139.

The flange portion 140 is provided with guide grooves 156 which are formed in the distal end surface of the flange portion 140 and to which the press members 152 are fitted. The guide grooves 156 extend in the diametrical direction of the flange portion 140. In this embodiment, two guide grooves 156 are spaced apart from each other to extend substantially parallel to each other. The guide grooves 156 are arranged on both sides of the center of the flange portion 140 and are spaced apart from the center of the flange portion 140 by the same distance.

On both sides of the guide grooves 156, guide walls 157 are formed to stand from the distal end surface of the flange portion 140 substantially in the vertical direction. These guide walls 157 extend along the guide grooves 156 from one end to the other end of the guide grooves 156, respectively.

The press members 152 and the coil spring 153 are arranged between the guide walls 157. Each press member 152 has fitting pieces 152b projecting from the both side edges (edges along the guide walls 157) toward the flange portion 140. The fitting pieces 152b are slidably fitted to the guide grooves 156. By the guide walls 157 and the guide grooves 156, the press members 152 and the coil spring 153 are held on the flange portion 140 in such a manner as to rotate together with the flange portion 140. The press members 152 are slidable in the diametrical direction of the flange portion 140 along the guide grooves 156 and the guide walls 157.

In this embodiment, as shown in FIG. 4, an ear-like knob supporting projection 145 is formed to project radially from the outer periphery of the bottom portion 142a. The knob 141 is supported by the supporting projection 145 through a support body 146 and a coil spring 147. That is, according to this embodiment, the knob 141 projects from the front surface of the handle 136 in such a manner that the knob 141 is allowed to elastically protracted and retracted. Therefore, even when the knob 141 collides with an object or something, the knob 141 is retracted into the handle 136 by the press of the collided object, thereby preventing the knob 141 itself and the object collided with the knob 141 from being damaged or mitigating the damage. As the object collided with the knob 141 moves apart from the knob 141, the knob 141 projects from the handle 136 to return to the original position because of biasing force of the coil spring 147.

In this embodiment, a substantial cylindrical sheath cover 142d of which diameter is larger than that of the sheath 139 is formed to project from the inner periphery of the shaft through hole 142c toward the rear end side of the sheath 139. A rear portion of the sheath 139 is accommodated in the sheath cover 142d. The sheath cover 142d covers a portion of the sheath 139 pulled out of the rib 16 when the sheath 139 is protracted.

Between the internal cylinder 144 and the peripheral wall portion 142b of the bottom portion 142a of the handle casing 142, screw holes 148 for fixing the handle cover 143 to the handle casing 142 are formed at intervals in the circumferential direction of the bottom portion 142a. Though four screw holes 142 are spaced from each other substantially by 90° in the circumferential direction of the bottom portion 142a in this embodiment, the number and positions of the screw holes 148 are not limited thereto.

The handle cover 143 has a substantially circular main disc portion 143a covering the distal end surface of the handle casing 142, and a cylindrical peripheral wall portion 143b extends along the peripheral edge of the main disc portion 143a to project toward the handle casing 142. The inner diameter of the peripheral wall portion 143b is similar to or slightly larger than the outer diameter of the peripheral wall portion 142b of the handle casing 142.

The handle cover 143 is provided with a knob receiving portion 143c, for covering the knob 141, the support body 146, and the coil spring 147, which is formed at a position facing the knob supporting projection 145 of the handle casing 142. The knob receiving portion 143c is formed as a substantially semi-cylindrical cell which bulges outwardly from the peripheral wall portion 143b. An opening 143d for allowing the knob 141 to protract and retract is formed in the distal end surface of the knob receiving portion 143c.

For connecting the handle 136 to the sheath 139, first the rear end side of the sheath 139 is inserted into the shaft through hole 142c of the handle casing 142 and the flange portion 140 is disposed in the internal cylinder 144 of the handle casing 142.

Then, the press members 152 are combined with the coil spring 153 by inserting the pins 152a at the rear end sides of the press members 152 into the both ends of the coil spring 153. With compressing the coil spring 153 to make the press members 152 closer to each other by fingers, the press members 152 and the coil spring 153 are disposed between the guide walls 157 on the distal end surface of the flange portion 140. During this, the fitting pieces 152b on the side faces of the press members 152 are fitted to the guide grooves 156, respectively. After that, the press members 152 are brought in contact with the pressed surface 151 of the internal cylinder 144 by releasing the fingers from the press members 152. During this, the convexities 154 of the press members 152 are engaged with the concavities 155 of the press surface 151, respectively.

Then, the knob 141 is disposed in the knob supporting projection 145 of the handle casing 142 through the support body 146 and the coil spring 147. After that, the handle cover 143 is put on the distal end side of the handle casing 142 with accommodating the support body 146, the coil spring 147, and the knob 141 in the knob receiving portion 143c. During this, the knob 141 is arranged to project out of the handle cover 143 through the opening 143d formed in the distal end surface of the knob receiving portion 143c. After that, the handle cover 143 is fixed to the handle casing 142 with the screws 149 through the screw holes 148.

In this manner, the operation of connecting the handle 136 to the sheath 139 is completed.

As mentioned above, the handle 138 opposite to the handle 136 has the same structure as that of the handle 136 so that the handle 138 can be connected to the opposite sheath 139 by the same procedures as for the handle 136.

As mentioned above, in the child seat 100, the coil spring 153 for pressing the press members 152 to the pressed surface 151 biases the press members 152 to the pressed surface 151 in a direction perpendicular to the axial direction of the sheath 139 connected to the handle 136, 138. Accordingly, for connecting the handle 136, 138 to the sheath 139, the handle 136, 138 is never biased in a direction apart from the sheath 139 by the coil spring 153, thereby facilitating the operation of connecting the handle 136, 138 to the sheath 139.

Further, since the coil spring 153 is arranged in the direction perpendicular to the axial direction of the sheath 139, the coil spring 153 does not expand in the axial direction, thereby achieving reduced thickness in the axial direction of the handle 136, 138. This can make the handle 136, 138 small in size and light in weight. If the handle 136, 138 is small in size as mentioned above, even an operator having a small hand can securely grip the handle 136, 138, that is, easy handle operation can be provided. In addition, since the distance of the handles 136, 138 projecting outwardly from the child seat 100 can be reduced, the handles 136, 138 are hard to collide with something around the child seat 100.

Hereinafter, steps of installing the child seat 100 to a vehicle seat will be described.

As shown in Fig. 10, the child seat 100 is first put on the vehicle seat, after that, the lap belt 1a and the shoulder belt 1b of the adult seat belt 1 are passed through one of the seat belt through apertures 20 or 22 and are then passed through the other through aperture 22 or 20 so as to extend between the through apertures 20 and 22, and a tongue (not shown) is then latched with a buckle (not shown). After that, the halfway of the shoulder belt 1b extending between the through apertures 20 and 22 is inserted into the belt slit 124a through the belt inlet 124b of the wind-up shaft 124.

After that, either of the handles 136, 138 is turned to rotate the wind-up shaft 124 so that the shoulder belt 1b is wound around the wind-up shaft 124 until sufficient tension is applied to the lap belt 1a and the shoulder belt 1b, thereby firmly securing the child seat 100 to the vehicle seat with the lap belt 1a and the shoulder belt 1b.

During this, since the convexities 154 are prevented from sliding out of the concavities 155 by the biasing force of the coil spring 153 when the torque applied to the handle 136, 138 does not exceed the predetermined value as shown in FIG. 5 and FIG. 7, the handle 136, 138 does not idle so that the torque is transmitted from the handle 136, 138 to the worm shaft 32 through the sheath 139. Accordingly, the winding of the shoulder belt 1b around the wind-up shaft 124 is continued.

After that, when the tension applied to the lap belt 1a and the shoulder belt 1b reaches the predetermined value, the torque applied to the handle 136, 138 exceeds the predetermined value. Since the torque exceeding the predetermined value is applied to the handle 136, 138, the convexities 154 slide out of the concavities 155 with retracting the press members 152 against the biasing force of the coil spring 153, whereby the press members 152 slide along the pressed surface 151. As a result of this, the handle 136, 138 idles relative to the sheath 139.

The operator terminates the operation of turning the handle 136, 138 after sensing that the handle 136, 138 idles. Therefore, the installation of the child seat 100 to the vehicle seat is completed.

As mentioned above, in the child seat 100, the handle 136, 138 is connected to the worm shaft 32 (sheath 139) through the torque clutch 150 and the handle 136, 138 is adapted to idle when tension of the predetermined value is applied to the lap belt 1a and the shoulder belt 1b by winding up the shoulder belt 1b around the wind-up shaft 124, thereby preventing excessive winding torque from being exerted on the wind-up shaft 124.

In this embodiment, the convexities 154 of the press members 152 slide out of the concavities 155 of the pressed surface 151 when the handle 136, 138 idles. From vibration generated by idling of the handle 36, 38, the operator senses feeling of click and thus can easily recognize that the handle 136, 138 idles, that is, the tension applied to the adult seat belt 1 reaches the predetermined value.

In this embodiment, when the handle 136, 138 is not used, the handle 136, 138 can be positioned adjacent to the sides of the child seat 100 as shown in FIG. 1 and FIG. 2 by pushing the handle 136, 138 toward the child seat 100 so as to bring the sheath 139 to the retraction position, thereby preventing the handle 136, 138 from causing an obstruction, for example, while carrying the child seat 100. When the handle 136, 138 is used, the handle 136, 138 can be moved apart from the side of the child seat 100 and closer to the operator by pulling the handle 136, 138 laterally outwardly so as to bring the sheath 139 to the protraction position, thereby allowing the operator to securely grip the handle 136, 138 for the operation.

As the aforementioned embodiment is an example of the present invention, it is to be understood that the invention is not limited to the aforementioned embodiment thereof.

For example, though the pressed surface 151 is provided on the handle 136 and the press members 152 are provided on the worm shaft 32 (the sheath 139) in the aforementioned embodiment, the pressed surface 151 may be provided on the worm shaft 32 (the sheath 139) and the press members 152 may be provided on the handle 136.

In the present invention, the telescopic mechanism of the worm shaft 32 by the sheath 139 may be omitted.

## Claims

1. A child seat adapted to be secured to a seat of a vehicle by an adult seat belt for an adult occupant in the vehicle, comprising:
a wind-up shaft (124) which has a slit (124a) into which the adult seat belt (1b) is inserted and which is rotatable in a state the adult seat belt (1b) is inserted into the slit (124a) so as to wind up the adult seat belt (1b), thereby applying tension to the adult seat belt (1b);
a shaft (32) which is interlocked with the wind-up shaft (124) to rotate said wind-up shaft (124);
a handle (136; 138) which is attached to the shaft (32); and
a clutch mechanism (150) which makes the handle (136; 138) idle when a torque exceeding a predetermined value is applied to the handle (136; 138); wherein
the clutch mechanism (150) comprises:
a pressed surface (151) which is provided on one of the shaft (32) and the handle (136; 138);
a press member (152) which is provided on the other one of the shaft (32) and the handle (136; 13 8) and is pressed to the pressed surface (151); and
a spring (153) for pressing the press member (152) to the pressed surface (151), wherein
the spring (153) has such a spring constant as to prevent the handle (136; 138) from idling relative to the shaft (32) by frictional force between the press member (152) and the pressed surface (151) when the torque applied to the handle (136; 138) does not exceed a predetermined value and as to allow the press member (152) to slide along the pressed surface (151) against the frictional force between the press member (152) and the pressed surface (151) so as to allow the handle (136; 138) to idle relative to the shaft (32),
**characterized in that**
the spring (153) is disposed in a direction perpendicular to the axial direction of the shaft (32) and biases the press member (152) to the pressed surface (151) in the direction perpendicular to the axial direction of the shaft (32).

2. A child seat as claimed in claim 1, wherein the pressed surface (151) is a cylindrical surface extending substantially coaxially with said shaft (32).

3. A child seat as claimed in claim 1 or 2, wherein a convexity (154) is formed to project from one of the pressed surface (151) and the press member (152) toward the other one and a concavity (155) which is detachably engaged with the convexity (154) is formed in the other one.

4. A child seat as claimed in any one of claims 1 through 3, wherein a telescopic member (139) which is protractable and retractable in the expansion and contraction directions of the shaft (32) is arranged at a distal end side of said shaft (32), wherein
said handle (136; 138) is attached to a distal end side of the telescopic member (139).

## Patentansprüche

1. Kindersitz, welcher ausgestaltet ist, an einem Sitz eines Fahrzeugs mit einem Erwachsenensitzgurt für einen erwachsenen Insassen in dem Fahrzeug befestigt zu werden, umfassend:
eine Aufwickelwelle (124), welche einen Schlitz (124a) aufweist, in welchem der Erwachsenensitzgurt (1b) eingesetzt ist, und welche in einem Zustand, in welchem der Erwachsenensitzgurt (1b) in dem Schlitz (124a) eingesetzt ist, drehbar ist, um den Erwachsenensitzgurt (1b) aufzuwickeln, wodurch eine Spannung auf den Erwachsenensitzgurt (1b) aufgebracht wird;
eine Welle (32), welche sich mit der Aufwickelwelle (124) in Eingriff befindet, um die Aufwickelwelle (124) zu drehen;
einen Griff (136; 138), welcher an der Welle (32) angebracht ist; und
einen Kupplungsmechanismus (150), welcher den Griff (136; 138) frei laufen lässt, wenn ein Moment, welches einen vorbestimmten Wert überschreitet, auf den Griff (136; 138) angewendet wird; wobei der Kupplungsmechanismus (150) umfasst:
eine Druckfläche (151), welche an einem von der Welle (32) und dem Griff (136; 138) vorgesehen ist;
ein Druckelement (152), welches an dem anderen von der Welle (32) und dem Griff (136; 138) vorgesehen ist und zu der Druckfläche (151) gedrückt wird; und
eine Feder (153) zum Drücken des Druckelements (152) zu der Druckfläche (151), wobei
die Feder (153) eine derartige Federkonstante aufweist, um zu verhindern, dass der Griff (136; 138) bezogen auf die Welle (32) durch eine Reibkraft zwischen dem Druckelement (152) und der Druckfläche (151) frei läuft, wenn das auf den Griff (136; 138) aufgebrachte Moment einen vorbestimmten Wert nicht überschreitet, und um zu ermöglichen, dass das Druckelement (152) entlang der Druckfläche (151) gegen die Reibkraft zwischen dem Druckelement (152) und der Druckfläche (151) entlang gleitet, um dem Griff (136; 138) zu ermöglichen, bezogen auf die Welle (32) freizulaufen,
**dadurch gekennzeichnet, dass**
die Feder (153) in einer Richtung senkrecht zu der axialen Richtung der Welle (32) angeordnet ist und das Druckelement (152) zu der Druckfläche (151) in der senkrechten Richtung zu der axialen Richtung der Welle (32) vorspannt.

2. Kindersitz nach Anspruch 1, wobei die Druckfläche (151) eine zylindrische Fläche ist, welche sich im Wesentlichen koaxial zu der Welle (32) erstreckt.

3. Kindersitz nach Anspruch 1 oder 2, wobei eine Konvexität (154) ausgebildet ist, um von einem von der Druckfläche (151) und dem Druckelement (152) in Richtung des anderen hervorzuragen, und eine Konkavität (155), welche lösbar mit der Konvexität (154) in Eingriff bringbar ist, an der anderen ausgebildet ist.

4. Kindersitz nach einem der Ansprüche 1-3, wobei ein teleskopisches Element (139), welches herausziehbar und zurückziehbar in der Ausdehnungs- und Zusammenziehrichtung der Welle (32) ist, an einer distalen Endseite der Welle (32) angeordnet ist, wobei
der Griff (136; 138) an einer distalen Endseite des teleskopischen Elements (139) angebracht ist.

## Revendications

1. Siège d'enfant conçu pour être fixé à un siège d'un véhicule par une ceinture de sécurité pour adultes pour un occupant adulte du véhicule, comprenant :
un arbre d'enroulement (124) qui présente une fente (124a) dans laquelle la ceinture de sécurité pour adultes (1b) est insérée et qui peut tourner avec la ceinture de sécurité pour adultes (1b) insérée dans la fente (124a) de façon à enrouler la ceinture de sécurité pour adultes (1b), appliquant ainsi de la tension à la ceinture de sécurité pour adultes (1b) ;
un arbre (32) qui est verrouillé réciproquement avec l'arbre d'enroulement (124) pour faire tourner ledit arbre d'enroulement (124) ;
une poignée (136 ; 138) qui est attachée à l'arbre (32), et
un mécanisme d'embrayage (150) rendant inactive la poignée (136 ; 138) quand un couple dépassant une valeur prédéterminée est appliqué à la poignée (136 ; 138), dans lequel
le mécanisme d'embrayage (150) comprend :
une surface recevant de la pression (151) prévue sur l'un parmi l'arbre (32) et la poignée (136 ; 138) ;
un organe exerçant de la pression (152) prévu sur l'autre parmi l'arbre (32) et la poignée (136 ; 138) et qui est appuyé contre la surface recevant de la pression (151) ; et
un ressort (153) pour presser l'organe exerçant de la pression (152) contre la surface recevant de la pression (151), dans lequel
le ressort (153) présente une constante de ressort apte à éviter à la poignée (136 ; 138) d'être inactive par rapport à l'arbre (32) par la force de frottement entre l'organe exerçant de la pression (152) et la surface recevant de la pression (151) lorsque le couple appliqué à la poignée (136 ; 138) ne dépasse pas une valeur prédéterminée et à permettre à l'organe exerçant de la pression (152) de glisser sur la surface recevant de la pression (151) à l'encontre de la force de frottement entre l'organe exerçant de la pression (152) et la surface recevant de la pression (151) afin de permettre à la poignée (136 ; 138) d'être inactive par rapport à l'arbre (32),
**caractérisé en ce que**
le ressort (153) est disposé selon une direction perpendiculaire à la direction axiale de l'arbre (32) et sollicite l'organe exerçant de la pression (152) contre la surface recevant de la pression (151) dans la direction perpendiculaire à la direction axiale de l'arbre (32).

2. Siège d'enfant selon la revendication 1, dans lequel la surface recevant de la pression (151) est une surface cylindrique qui s'étend de façon sensiblement coaxiale audit arbre (32).

3. Siège d'enfant selon la revendication 1 ou 2, dans lequel une convexité (154) est formée pour faire saillie à partir de l'un de la surface recevant de la pression (151) et de l'organe exerçant de la pression (152) vers l'autre, et une concavité (155) susceptible de venir en prise de façon amovible avec la convexité (154) est formée dans l'autre.

4. Siège d'enfant selon l'une quelconque des revendications 1 à 3, dans lequel un élément télescopique (139) qui est extensible et escamotable dans le sens d'expansion et de contraction de l'arbre (32) est disposé sur un côté d'extrémité distale dudit arbre (32), dans lequel
ladite poignée (136 ; 138) est fixée à un côté d'extrémité distale de l'élément télescopique (139).
